(19) Europäisches Patentamt
European Patent Office
Office européen des brevets

(11) Publication number: **0 260 108 B1**

(12) # EUROPEAN PATENT SPECIFICATION

(45) Date of publication of patent specification: **14.10.92**

(51) Int. Cl.5: **C08F 220/56**, C08F 220/60, C10G 33/04, B01D 17/05

(21) Application number: **87307925.5**

(22) Date of filing: **08.09.87**

Divisional application 91202006.2 filed on 08/09/87.

(54) **Hydrophobically functionalized cationic polymers.**

(30) Priority: **08.09.86 US 904418**
**08.09.86 US 904461**
**08.09.86 US 904548**
**08.09.86 US 904908**

(43) Date of publication of application:
**16.03.88 Bulletin 88/11**

(45) Publication of the grant of the patent:
**14.10.92 Bulletin 92/42**

(84) Designated Contracting States:
**DE FR GB**

(56) References cited:
**US-A- 3 691 086**
**US-A- 3 970 606**

(73) Proprietor: **EXXON RESEARCH AND ENGINEERING COMPANY**
**P.O.Box 390, 180 Park Avenue**
**Florham Park, New Jersey 07932(US)**

(72) Inventor: **Bock, Jan**
**500 Juniper Lane**
**Bridgewater New Jersey 08807(US)**
Inventor: **Jacques, Donald Francis**
**2310 Poplar Park Drive**
**Kingwood Texas 77339(US)**
Inventor: **Valint, Paul Louis, Jr.**
**RR No. 1, Box 248 Bellwood Park Road**
**Asbury New Jersey 08802(US)**
Inventor: **Pacansky, Thomas John**
**319 Tamerlaine Drivel**
**Houston Texas 77024(US)**
Inventor: **Yang, Henry Wu-Hsiang**
**4818 River Hill Drive**
**Kingwood Texas 77345(US)**

(74) Representative: **Fletcher Watts, Susan J. et al**
**ESSO Engineering (Europe) Ltd. Patents & Licences Mailpoint 72 Esso House Ermyn Way**
**Leatherhead, Surrey KT22 8XE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 260 108 B1

## Description

The present invention relates to hydrophobically functionalized cationic polymers, especially terpolymers, and their methods of preparation. These terpolymers can be used in the separation of oil from water in an oil-in-water emulsion, and the present invention also relates to a process for breaking an oil-in-water emulsion.

It is known from US Patent 3,691,086 that oil may be separated from an oil-in-water liquid emulsion system by contacting the system with a separation aid comprising a water soluble cationic vinyl polymer preferably in conjunction with a water soluble salt of a polyvalent metal and a silica sol. The vinyl polymer may be a homopolymer, copolymer or terpolymer. The patent lists a number of specific polymer compounds as suitable separation aids, and for the terpolymer these are acrylamide, beta-acryloyloxyethyldimethylamine and beta-acryloyloxyethyltrimethylammonium methyl sulphate terpolymer, and methacrylamide and beta-methacryloyloxyethyldimethylamine copolymer reacted with dimethyl sulphate to convert more than 50 percent of the tertiary amine groups to quarternary ammonium groups.

The present invention describes novel hydrophobically associating polymer compositions containing cationic monomers useful for the clean-up of waste waters containing organic contaminants. In addition, they find utility in processes for breaking or resolving oil-in-water emulsions, such as those produced during oil recovery operations. The polymers are preferably terpolymers consisting of acrylamide, a cationic monomer and alkyl(meth)-acrylamide. The cationic monomers used in these polymers are salts of an ethylenically unsaturated amine base, such as 3-methacrylamidopropyltrimethylammonium chloride (MAPTAC), 2-methacrylatoethyltrimethylammonium chloride (METAC) and diallyl dimethylammonium chloride (DMDAAC). The polymers can be used for oily water treatment or the polymers can be isolated in the solid form for subsequent use.

One process for preparing the instant polymers relies on the complete solubilization of the water insoluble monomer by means of a dilute solution of a suitable water soluble surfactant. The type and concentration of surfactant are chosen to produce a clear, uniform, homogeneous aqueous dispersion of the hydrophobic monomers in the presence of both nonionic and cationic water soluble monomers and, in addition, the reaction medium remains a clear, uniform, homogeneous mixture with no phase separation as the reaction proceeds to completion. The micelles formed by the surfactant are small aggregates, consisting of on the order of 50 to 200 molecules. They are stable toward phase separation and effectively disperse the water insoluble monomer on a very fine scale so that the polymerisation is effected without the formation of latexes or fine particulates of water insoluble polymer.

A second process for preparing the instant polymers relies on the dissolution of the water insoluble monomer(s) into an aqueous solution of water soluble monomers by means of a water miscible mutual cosolvent. The type and concentration of miscible solvents are chosen to produce a clear, uniform, homogeneous aqueous solution of the hydrophobic monomers in the presence of both nonionic and cationic water soluble monomers. In addition, the reaction medium remains a clear, uniform, homogeneous mixture with no phase separation at low conversion. As the reaction proceeds toward completion some turbidity may occur, however, the solutions are stable toward phase separation. The water insoluble monomer remains dispersed on a very fine scale so that the polymerization is effected without the formation of particulates of water insoluble polymer.

The present invention also teaches an improved process for clean-up of waste waters containing organic contaminants. In addition, the process is useful for breaking or resolving oil-in-water emulsions, such as those produced during oil recovery operations. Both the extent of clean-up based on residual oil left in the waste water and the efficiency of clean-up based on the treat rate of additive have been found to be significantly improved using the novel process of this invention. The novel process involves the use of a low level of a water dispersible polymer, preferably a terpolymer, consisting of a water soluble nonionic monomer, such as acrylamide, a cationic monomer, such as 3-acrylamidopropyltrimethylammonium chloride, and a hydrophobic monomer, such as alkyl(meth)acrylamide. These terpolymers are effective for the clean-up of waste waters containing organic contaminants and for the breaking of oil-in-water produced emulsions.

In one aspect the water soluble hydrophobically associating polymers of the present invention are characterized by the formula:

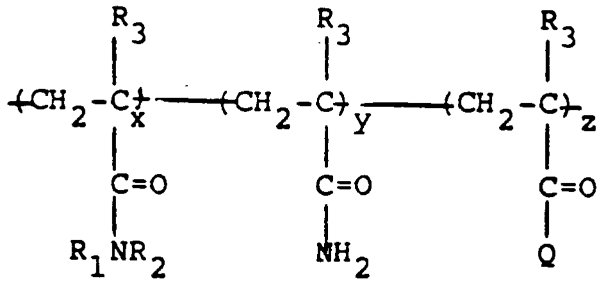

wherein $R_1$ is a $C_4$ to $C_{30}$ linear or branched alkyl, alkylcycloalkyl, or alkylaryl group, preferably $C_6$ to $C_{22}$, and most preferably $C_6$ to $C_{18}$; $R_2$ is the same or different group as $R_1$, or hydrogen or $C_1$ to $C_3$ linear or branched alkyl group; $R_3$ is hydrogen or methyl; and Q is a salt of an ammonium cation, such as $NH(CH_2)_nN^+(R_{4,5,6})_3X^-$ or $O(CH_2)_nN^+(R_{4,5,6})_3X^-$ wherein n = 1 to 6 and $R_4$, $R_5$ and $R_6$ can be hydrogen, a $C_1$ to $C_6$ linear or branched alkyl group, a $C_5$ to $C_8$ cycloalkyl, aromatic or alkylaromatic group and $X^-$ is an anion, such as chloride, bromide, or methyl or hydrogen sulfate. The mole percentage of alkylacrylamide, x, is from 0.1 to 20 mole percent, preferably 0.2 to 10 mole percent, and most preferably 0.2 to 5 mole percent. The mole percentage of acrylamide, y, is from 0 to 94.9, preferably 10 to 94.8, and most preferably 25 to 94.8. The mole percentage of the cationic monomer, z, is from 5 to 99.9, preferably 5 to 80, most preferably 5 to 70.

In another aspect the polymers of the present invention are characterised by the formula:

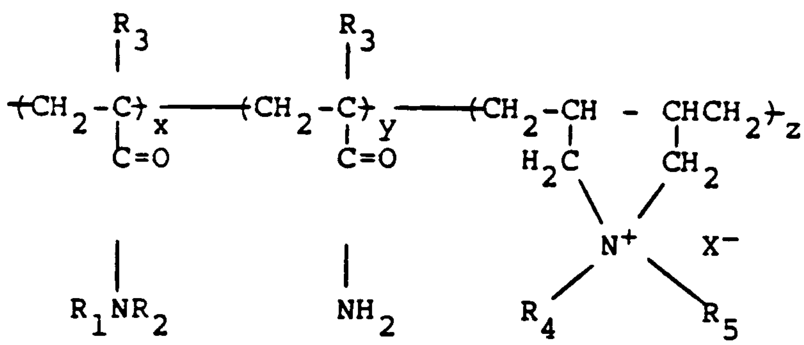

wherein $R_1$ is a $C_4$ to $C_{30}$ linear or branched alkyl, alkylcycloalkyl group or alkylaryl group, more preferably $C_6$ to $C_{20}$, and most preferably $C_6$ to $C_{18}$; and $R_2$ is the same or different group as $R_1$ or hydrogen or $C_1$ to $C_3$ linear or branched alkyl group; $R_3$ is hydrogen or methyl; $R_4$ and $R_5$ can be hydrogen, a $C_1$ to $C_6$ linear or branched alkyl group, a $C_5$ to $C_8$ cycloalkyl, aromatic or alkylaromatic group; and $X^-$ is an anion, such as chloride, bromide or methyl sulfate. The mole percentage of alkylacrylamide, x, is from 0.1 to 20 mole percent, preferably 0.2 to 10 mole percent, and most preferably 0.2 to 5 mole percent. The mole percentage of acrylamide, y, is from 0 to 94.9, preferably 10 to 94.8, and most preferably 25 to 94.8. The mole percentage of the cationic monomer, z, is from 5 to 99.9, preferably 5 to 80, most preferably 5 to 70.

The micellar free radical polymerization process of this invention used to prepare the instant polymers comprises the steps of forming a micellar surfactant solution of a specially chosen surfactant and the oil soluble or hydrophobic monomer in an aqueous solution of acrylamide and cationic monomer, deaerating this solution by purging with an inert gas such as nitrogen or additionally applying a vacuum; raising the temperature to the desired reaction temperature; adding sufficient free radical initiator to the reaction solution; and polymerizing for a sufficient period of time at a sufficient temperature to effect polymerization. The resulting terpolymer of acrylamide, cationic monomer and a hydrophobic monomer can be isolated from the reaction mixture by any of a variety of techniques which are well known to one skilled in the art. For example, the polymer may be recovered by precipitation using a non-solvent, such as acetone, methanol, isopropanol or mixtures thereof. The precipitated polymer can then be washed and oven dried to provide a product in the form of a free flowing powder. Alternatively, the polymer solution may be used as is by diluting with the desired aqueous solvent to the concentration of use.

The present invention describes a terpolymerization process of a nonionic, water soluble, ethylenically unsaturated monomer, such as acrylamide; a water soluble, cationic monomer from the group consisting of salts of ammoniumalkyl(meth)acrylamides, ammoniumalkyl(meth)-acrylates or diallyl dialkyl ammonium salts; and a water insoluble monomer, such as an N-alkyl(meth)acrylamide. The process for synthesizing these terpolymers relies on solubilizing the water insoluble monomer into a predominantly aqueous media by the use of a suitable water soluble surfactant, such as dodecyltrimethylammonium chloride. When mixed with an aqueous solution of the water soluble acrylamide monomer and the water soluble cationic monomer, the surfactant solution can disperse the water insoluble monomer on an extremely fine scale so that the reaction mixture is isotropic, clear and homogeneous. These micellar reaction mixtures are free from visible oil droplets or particulates of the water insoluble monomer. The terpolymerization can, therefore, be initiated by water soluble initiators to yield terpolymers which are substantially free of visible particulates. The resultant reaction mixture remains homogeneous throughout the course of the reaction without the need for agitation with external mixers or stirrers.

Micelles formed by the surfactant which solubilize the water insoluble monomer are generally small aggregates which consist of on the order of 50 to 200 molecules. They may assume a Variety of shapes, from spherical to rod-like or cylindrical, and generally are in the size range from 2 to 50 nm (20 Angstroms to 500 Angstroms) in diameter. These micelles form spontaneously upon mixing the components together, i.e., they do not require the Vigorous mixing conditions required in conventional emulsion polymerization in which macroemulsions are formed. The macroemulsion droplets of the conventional emulsion polymerization process have diameters which are at least 1000 nm (10,000 Angstroms). They, therefore, tend to phase separate upon standing, leading to undesirable inhomogeneities in the produced polymer. The homogeneous micellar reaction mixtures is, on the other hand, much more stable against demixing than the formulations used in emulsion polymerization processes. Indeed, no stirring is required during the course of the micellar polymerization; the micellar aggregates remain extremely finely dispersed throughout the reaction. Moreover, the finely dispersed nature of the micellar aggregates permit the polymerization to occur in such a way that a water soluble polymer is produced which does not contain particulates or latexes of water insoluble polymers. Thus, more of the polymer is available for solution rheology control or for treating oily waste water.

The surfactants used in this process may be one of the cationic surfactants, such as alkyltrimethylammonium halides, either chlorides or bromides. Preferred are decyltrimethylammonium chloride, dodecyltrimethylammonium chloride and tetradecyltrimethyl-ammonium chloride. For these ionic surfactants the Krafft point, which is defined as the minimum temperature for micelle formation, must be below the temperature used for the polymerization. Thus, at the conditions of polymerization, the desired surfactant will form micelles which solubilize the water insoluble monomer. To determine if a particular cationic surfactant can be used in the process of the instant invention, it must solubilize the hydrophobic monomer at a level of at least 10 percent of its weight. The surfactant must also form a clear, homogeneous solution in the presence of the water soluble monomers at the polymerization temperature.

Nonionic surfactants can also be used for preparing the polymers of this invention. For example, ethoxylated alcohols, ethoxylated alkyl phenols, ethoxylated dialkyl phenols, ethylene oxidepropylene oxide copolymers and polyoxyethylene alkyl ethers and esters can be used. Preferred nonionic surfactants are ethoxylated nonyl phenol with 5 to 20 ethylene oxide units per molecule, ethoxylated dinonyl phenol containing 5 to 40 ethylene oxide units per molecule and ethoxylated octyl phenol with 5 to 15 ethylene oxide units per molecule. Combinations of cationic and nonionic surfactants can also be used as long as the surfactants solubilize the hydrophobic monomer into an aqueous phase containing the water soluble monomers. The surfactant or mixture of surfactants will be used at concentrations above their critical micelle concentration and preferably at concentration such that only one hydrophobic monomer is associated with each surfactant micelle. Thus, the actual concentration of surfactant for a given polymerization will depend on the concentration of insoluble or hydrophobic monomers employed.

Polymerization of the water soluble and water insoluble monomers is conducted in an aqueous micellar solution containing a suitable free radical initiator. Examples of suitable water soluble free radical initiators include peroxides, such as hydrogen peroxide; persulfates, such as sodium, potassium or ammonium persulfate and water soluble azo initiators. The concentration of the free radical initiator is 0.01 to 0.5 grams per hundred grams of total monomers. Suitable oil soluble initiators are organic peroxides and azo compounds, such as azobisisobutyronitrile. Water soluble initiators are preferred, such as potassium persulfate. Redox initiation involving an oxidant, such as potassium persulfate or bromate, and a reductant, such as sodium metabisulfite or tertiary amines, such as triethyl amine, can also be used to initiate polymerization, particularly at low temperature.

Polymerizing at lower temperature results in the formation of higher molecular weight polymers, which

are desirable from the standpoint of efficient aqueous viscosification and oily water clean-up. Typically it is desired to employ from 0.01 to 0.5 weight percent of initiator based on the weight of monomers. The polymerization temperature is preferably 0 ° C to 90 ° C, more preferably 20 ° C to 80 ° C and most preferably 25 ° C to 70 ° C.

The second process for preparing the instant polymers is a solution free radical polymerization process of this invention which comprises the steps of forming a uniform solution of an oil soluble or hydrophobic monomer, a nonionic water soluble monomer, such as acrylamide, and a cationic monomer, such as MAPTAC, using a minor amount of a water miscible solvent, such as acetone, methanol or isopropanol, and a major amount of water; deaerating this solution by purging with nitrogen or, additionally, applying a vacuum; raising the temperature to the desired reaction temperature; adding sufficient free radical initiator to the reaction solution; and polymerizing for a sufficient period of time at a sufficient temperature to effect polymerization. The resulting polymer of acrylamide, cationic monomer and a hydrophobic monomer can be isolated from the reaction mixture by any of a variety of techniques which are well known to one skilled in the art. For example, the polymer may be recovered by precipitation using a nonsolvent, such as acetone, methanol, isopropanol or mixtures thereof. The precipitated polymer can then be washed and oven dried to provide a product in the form of a free flowing powder. Alternatively, the polymer solution may be used as is by diluting with the desired aqueous solvent to the concentration of use.

The process relies on solubilizing the water insoluble monomer into a predominantly aqueous media by the use of mutual solvents, comprising a mixture of a suitable water miscible solvent, such as a short chain alcohol or acetone and water. When mixed with the water soluble acrylamide monomer and the water soluble cationic monomer the solution remains clear and homogeneous. The water insoluble monomer is dispersed on an extremely fine scale so that the reaction mixture is isotropic, clear and homogeneous. The polymerization can, therefore, be initiated by water soluble initiators to yield polymers which are substantially free of visible particulates. The resultant reaction mixture remains homogeneous throughout the course of the reaction without the need for agitation with external mixers or stirrers.

The polymerization reaction is conducted in a suitable solvent mixture consisting of a minor amount of a water miscible solvent and a major amount of water. The water miscible solvent is an oxygenated solvent containing 1 to 4 carbon atoms, such as methanol, ethanol, isopropanol and isobutanol or acetone. The preferred alcohol solvent is isopropanol. The concentration of cosolvent alcohol or acetone in the mutual solvent mixture with water is 2 to 40 volume percent, more preferably 2 to 30 volume percent, and most preferably 5 to 25 volume percent.

Polymerization of the water soluble and water insoluble monomers is conducted in solution using a suitable free radical initiator. Examples of suitable water soluble free radical initiators include peroxides, such as hydrogen peroxide; persulfates, such as sodium, potassium or ammonium persulfate, and water soluble azo initiators The concentration of the free radical initiator is 0.01 to 0.5 grams per hundred grams of total monomers. Suitable oil soluble initiators are organic peroxides and azo compounds, such as azobisisobutyronitrile. Water soluble initiators are preferred, such as potassium persulfate or azo initiators. Redox initiation involving an oxidant, such as potassium persulfate or potassium bromate, and a reductant, such as sodium metabisulfite, or tertiary amines, such as triethyl amine, can also be used to initiate polymerization, particularly at low temperatures. Polymerizing at lower temperature results in the formation of higher molecular weight polymers which are desirable from the standpoint of efficient aqueous viscosification. Typically, it is desired to employ from 0.01 to 0.5 weight percent of initiator based on the weight of monomers. The polymerization temperature is preferably 0 ° C to 90 ° C, more preferably 20 ° C to 80 ° C, and most preferably 25 ° C to 70 ° C.

Molecular weight of the polymer is also an important parameter which can be controlled by the polymerization process conditions of this invention. High molecular weight polymers incorporating both cationically charged ammonium groups and hydrophobic groups can be prepared by using high monomer concentrations under conditions which provide low effective radical concentration. For example, reducing the reaction temperature or the concentration of the initiator will, in general, reduce the radical concentration and result in higher polymer molecular weights. Increased molecular weight will improve solution rheological properties and oily water treatment performance. All other things being equal, the higher the molecular weight the less soluble the polymer. Thus, as molecular weight is increased the amount of hydrophobic groups should be reduced and the amount of cationic groups increased.

To evaluate and characterize the unique and useful properties of hydrophobically associating polymers and the effect of the process conditions of this invention, dilute solution viscometric measurements were made. These measurements are particularly useful for evaluating the effect of composition and polymerization process conditions on the hydrodynamic size of the polymer in solution and the influence of associating groups. The hydrodynamic size is measured by the intrinsic viscosity which is proportional to the viscosity

average polymer molecular weight. To determine the intrinsic viscosity, the reduced viscosity is first evaluated at several polymer concentrations in the dilute regime. The reduced viscosity is defined as the incremental viscosity increase of the polymer solution relative to the pure solvent normalized with respect to the pure solvent viscosity and the polymer concentration. A plot of reduced viscosity versus polymer concentration should yield a straight line at low polymer concentrations. The intercept of this reduced viscosity plot at zero polymer concentration is defined as the intrinsic viscosity, while the slope is the Huggins' interaction coefficient times the square of the intrinsic viscosity. The Huggins' constant is a measure of polymer-solvent interactions. For hydrophobically associating polymers, it is characteristically greater than the 0.3 to 0.7 value normally observed for non-associating polymers, such as polyacrylamides.

Measurement of the dilute solution viscosity can be made with conventional Couette or capillary viscometers. A set of Ubbelhode capillary viscometers were used in this study and shear rate effects were found to be negligible in the concentration range of interest. However, since the terpolymers contain cationically charged groups, a polyelectrolyte effect was observed in dilute solution. This polyelectrolyte effect resulted in an increase in reduced viscosity with decreasing polymer concentration and tended to mask the effect of hydrophobic associations. The addition of salts, such as sodium chloride or sodium sulphate, shielded the charge repulsion causing the polyelectrolyte effect and resulted in the desired linear reduced viscosity-concentration profile. The dilute solution measurements were thus made on solutions containing 2.0 weight percent sodium chloride.

The solution viscosity of associating polymers in the semi-dilute concentration regime is dramtically different than conventional water soluble polymers. Viscosities of these solutions were measured by means of a Contraves low shear viscometer, model LS-30, using a No. 1 cup and No 1 bob. Temperatures were controlled to ± 0.1 ° C and measurements were made at a variety of rotational speeds corresponding to shear rate ranging from 1.0 $sec^{-1}$ to about 100 $sec^{-1}$. In contrast to conventional water soluble polymers and relatively low molecular weight, weakly associating polymers, the terpolymers prepared by the process of this invention can exhibit significant relaxation times, which result in slow equilibration. To determine steady state viscosity values at a given stress or shear rate, relatively long measurement times were employed. This effect is most evident at higher polymer concentrations, higher polymer molecular weights and in regions of strong intermolecular hydrophobic associations.

Another advantage of the polymers disclosed here over polymers currently used is the discovery that the presence of a hydrophobic group on the water soluble polymer results in a significant improvement in the breaking of reverse emulsions and the removal of emulsified or dispersed oil from waste waters. By way of example, oil droplets emulsified in water generally carry a negative surface charge or zeta potential which helps to stabilize the emulsion, keeping the droplets dispersed and making them difficult to resolve or break. Cationic polymers or surfactants are used to neutralize the surface charge. Once the charge is neutral the droplets may begin to approach each other and agglomerate or coalesce since the electrostatic repulsion responsible for a significant portion of the emulsion's stability has been eliminated. Eventually large floc formation or liquid oil format on occurs Once the droplets begin to flocculate they can begin to float since they are much larger than the starting oil droplets. As they grow in size they will rise to the surface of the water at a faster range. If a high molecular weight cationic polymer is used for charge neutralization, the polymer will accelerate the separation of the oil since the polymer is attracted to the oil droplet by coulombic attraction, hydrogen bonding or other mechanisms. In some cases low molecular weight cationic chemicals are added for charge control and then high molecular weight nonionic or anionic polymers are added to cause polymer bridging between droplets and accelerate floc formation.

To evaluate the influence of polymerization process conditions on the use of these polymers for the removal of emulsified oil from water, about 0.1 to about 200 ppm of the hydrophobically functionalized water soluble cationic polymer were added. After contacting under suitable agitation conditions for a prescribed time period, the emulsified oil droplets and polymer separated under quiescent conditions into a distinct layer from the water. The rate of mixing after polymer addition varied, depending on the type of water being treated, the amount of oil emulsified in the water, temperature and several other conditions. The concentration of oil remaining in the water after treatment with the disclosed polymers was significantly less than the concentration of oil remaining in the water after similar treatment with a similar polymer not containing the novel hydrophobe functionalization. The oil which separated as a distinct layer from the layer of water was separated from the water by conventional methods.

While it is difficult to exactly simulate a process to break oily water emulsions and oil field produced fluids, commonly referred to as reverse emulsions, it is common practice to make laboratory emulsions using crude oil from an oil production field of interest by high shear mixing the given crude into water using a Waring blender or homogenizer. The formed oil-in-water emulsion can then be diluted with water and other suitable materials to simulate the oil production field being studied. The emulsions thus produced

simulate oily waste water from a given area, but are recognized as being an approximation. One would typically use these laboratory emulsions for testing chemical additives in the laboratory prior to confirmatory testing on the actual system in the field.

A common laboratory test used to simulate a mild water clarification process in the field is what is referred to as the Jar Test. The Jar Test involves putting 500 ml of a laboratory prepared or actual field emulsion into 600 ml clear glass beakers (six at a time). Larger beakers may be used if enough fluid is available. The beakers are then placed on a six-paddle Phipps & Bird stirrer and mixed at a high rate, referred to as the fast mix period. Polymer is added at this mixing speed and timing is begun. After a specified amount of time at high speed the mixing rate is reduced to a much slower rate for another specified amount of time. The beakers are removed from the mixer and allowed to stand for another period of time. Samples of solution are removed from a point near the 250 ml mark on the beakers and tested for turbidity (NTU) using standard test equipment and oil-in-water content using one of several available methods An example of one of the oil-in-water determinations is to Freon-extract the oil from waste water and then measure its infrared absorbance relative to a standard. The object of the test is to achieve the lowest NTU or oil level using the smallest amount of polymer. The actual mixing rates and times used in the Jar test depend on the system being simulated and vary from study to study. The Jar Test, from the experience of many investigators over the years, has been shown to provide a good simulation of field clarification systems.

Another laboratory test commonly used in the current art is the Wemco 1+1 Laboratory Flotation Machine, available from Wemco in Sacramento, California. The technique used by the Wemco is also commonly referred to as induced air flotation The Wemco 1+1 Laboratory Flotation Machine is a small scale pilot unit designed to model the full scale units built by Wemco, which are commonly used in oil fields and in several other industries for water clarification and oil and solids removal. The laboratory Wemco, from the experience of several investigators over the years, has been found to provide a good simulation of what will occur in the larger unit when it is used in the evaluation of chemical additives. Laboratory prepared or actual field waste waters or emulsions are added to the test bowl of the Wemco and mixed for a few seconds with chemical additives without aeration. The air is then turned on and flotation occurs. Samples of the Wemco treated water are then withdrawn from a point near the bottom of the bowl for turbidity and oil-in-water determinations as described above.

The process for synthesizing these terpolymers relies on solubilizing the water insoluble monomer into a predominantly aqueous media by the use of a suitable water soluble surfactant, such as dodecyl trimethylammonium chloride. When mixed with an aqueous solution of the water soluble acrylamide monomer and the water soluble cationic monomer the surfactant solution can disperse the water insoluble monomer on an extremely fine scale so that the reaction mixture is isotropic, clear and homogeneous. These micellar rection mixtures are free of fisible oil droplets or particulates of the water insoluble monomer. The terpolymerization can, therefore, be initiated by water soluble initiators to yield terpolymers which are substantially free of visible particulates. The resultant reaction mixture remains homogeneous throughout the course of the reaction without the need for agitation with external mixers or stirrers.

The surfactants used in this process may be one of the water soluble surfactants, such as alkyltrimethylammonium halides, either chlorides or bromides. Preferred are decyltrimethylammonium chloride, dodecyl-trimethylammonium chloride and tetradecyltrimethylamonium chloride. For these ionic surfactants the Krafft point, which is defined as the minimum temperature for micelle formation, must be below the temperature used for the polymerization. Thus, at the conditions of polymerization the desired surfactant will form micelles, which solubilize the water insoluble monomer. Nonionic surfactants can also be used for preparing the polymers of this invention. For example ethoxylated alcohols, ethoxylated alky phenols, ethoxylated dialkylphenols, ethylene oxide-propylene oxide copolymers and polyoxyethylene alkyl ethers and esters can be used. Preferred nonionic surfactants are ethoxylated nonylphenol with 5 to 20 ethylene oxide units per molecule ethoxylated dinonyl phenol containing 5 to 40 ethylene oxide units per molecule and ethoxylated octyl phenol with 5 to 15 ethylene oxide units per molecule.

The advantage of the polymers disclosed here over polymers currently used is the discovery that the presence ofa hydrophobic group on the water soluble polymer results in a significant improvement in performance, namely, the breaking of reverse emulsions and the removal of emulsified or dispersed oil from waste waters. By way of example, oil droplets emulsified in water generally carry a negative surface charge or zeta potential which helps to stabilize the emulsion, keeping the droplets dispersed and making them difficult to resolve or break. Cationic polymers or surfactants are used to neutralize the surface charge. Once the charge is neutral the droplets may begin to approach each other and agglomerate or coalesce since the electrostatic repulsion responsible for a significant portion of the emulsion's stability has been eliminated. Eventually large floc formation or liquid oil formation occurs. Once the droplets begin to

flocculate they can begin to float since they are much larger than the starting oil droplets. As they grow in size they will rise to the surface of the water at a faster rate. If a high molecular weight cationic polymer is used for charge neutralization, the polymer will accelerate the separation of the oil since the polymer is attracted to the oil droplet by coulombic attraction, hydrogen bonding or other mechanisms. In some cases low molecular weight cationic chemicals are added for charge control and then high molecular weight nonionic or anionic polymers are added next to cause polymer bridging between droplets and accelerate floc formation.

The advantage of the disclosed polymers is related to the fact that they are water dispersible to water soluble but also contain small amounts of hydrophobic groups. Not wishing to be bound by theory, we believe that while conventional polymers can only attach themselves to oil droplets by coulombic attraction, hydrogen bonding or other mechanisms, the hydrophobic groups of these novel terpolymers can also be attracted by a hydrophobic group - hydrophobic oil droplet association. While coulombic attraction still appears to be the strongest type of attaction, the hydrophobic association or hydrophobivc effect appears to add a significant strengthening to this attraction as evidence by improved emulsion breaking and waste water clean-up. Indications are that the cationic hydrophobic polymers of this invention enable the formation of very strong floc particles. This is based on the observation that, unlike many conventional treatments,the floc articles produced by using the polymers of this invention are very difficult to redisperse Adsorption of the hydrophobic functionalized water soluble polymer on the surface of the oil droplets is believed to be the cause of this observation.

The process for the removal of the emulsified oil from the water comprises adding under suitable agitation conditions 0.1 to 200 ppm of the hydrophobically functionalized water soluble cationic polymer to the waste water containing the emulsified oil droplets. After contacting under suitable agitation conditions for a prescribed time period, the emulsified oil droplets and polymer separate under quiescent conditions into a distinct layer from the water. The disclosed polymers are used at a concentration which depends on the amount of oil present and several other factors. The rate of mixing after polymer addition varies, depending on the type of water being treated, the amount of oil emulsified in the water, temperature and several other conditions. The concentration of oil remaining in the water after treatment with the disclosed polymers is significantly less than the concentration of oil remaining in the water after similar treatment with a similar polymer not containing the novel hydrophobe functionalization. The oil layer which has separated as a distinct layer can be removed from the water by conventional methods.

This disclosure describes a process to break oily water emulsions and oil field produced fluids, commonly referred to as reverse emulsions. While it is difficult to exactly simulate these emulsions in the laboratory, it is common practice to make laboratory emulsions using crude oil from an oil production field of interest by high shear mixing the given crude into water using a Waring blender or homogenizer. The then-formed oil-in-water emulsion can then be diluted with water and other suitable materials to simulate the oil production field being studied. The emulsions thus produced simulate oily waste waters from a given area but are recognized as being an approximation. One would typically use these laboratory emulsions for testing chemical additives in the laboratory prior to confirmatory testing on the actual system in the field. While this method appears suitable for the testing of oily waste waters, the testing of chemical additives as oil field produced fluid reverse emulsion breakers in the laboratory is next to impossible and generally requires that such test work be carried out in the field since the very concentrated oil-in-water emulsions prepared in the laboratory are not stable and do not suitably simulate wellhead produced fluids.

The following Examples illustrate the present invention without, however, limiting the same hereto.

Comparative Example 1

A micellar solution of 3.0 weight percent sodium dodecylsulfate, SDS, was prepared in 500 ml of deoxygenated water. N-1-octylacrylamide, 0.403 gm, was dissolved with 12.37 gm of acrylamide and 9.73 gm of MAPTAC. The resulting solution was carefully transferred to a 1 L Morton style resin kettle fitted with a chilled water condenser, thermometer, inert gas sparger and mechanical stirrer. The temperature was adjusted to 25°C and polymerization was initiated by the addition of 0.0117 gm of $K_2S_2O_8$ and 0.0077 gm of $Na_2S_2O_5$. Within a short time a white solid was observed to precipitate and this continued for several hours. The resulting polymer was isolated by filtration and found to be partially insoluble in water, yielding a heterogeneous suspension rather than the desired soluble terpolymers of this invention.

Comparative Example 2

N-1-octylacrylamide, 0.40 gm, were added to a homogeneous solution of 12.4 gm of acrylamide and

9.7 gm of MAPTAC in 500 ml of deoxygenated water. The N-1-octylamide did not dissolve and remained as a suspension. This dispersion was transferred to a 1 L Morton style resin kettle fitted as described in Comparative Example 1 and a similar initiation procedure was employed. At the end of polymerization small insoluble latex particles were observed in the reaction. Following polymer isolation, using the procedure described in Example 1, the resulting polymer was found to be only partially soluble in water. This heterogeneous suspension contained microlatexes of insoluble particles rather than the desired soluble terpolymers of this invention.

Comparative Example 3

An aqueous methanol solution was prepared with purified, deoxygenated water. N-1-octylacrylamide, 0.43 gm, was dissolved in 500 ml of this solution, followed by 12.37 gm of acrylamide, and 9.84 gm of 3-methacrylamidopropyltrimethylammonium chloride. The resulting solution was carefully transferred to a 1 L Morton style resin kettle fitted with a chilled water condenser, thermometer, inert gas sparger and mechanical stirrer. The temperature was adjusted to 25°C and polymerization was initiated by the addition of 0.00117 gm of $K_2S_2O_8$, followed by 0.00077 gm $Na_2S_2O_5$. After stirring for 16 hours at 25°C the viscous solution was poured slowly into 3 L of acetone. The precipitated polymer was then masticated in a Waring blender with additional acetone, filtered and dried under vacuum at 30°C. The resulting polymer was determined to have low molecular weight relative to the polymers of this invention, based on solution viscosity measurements.

Examples 1-24

Micellar Polymerization of N-1-Octylacrylamide, MAPTAC and Acrylamide

A micellar surfactant solution was prepared in 500 ml of deoxygenated water. N-1-octylacrylamide, $C_8$AM, was dissolved in this solution, followed by acrylamide and 3-methacrylamidopropyltrimethylammonium chloride, MAPTAC. The resulting solution was carefully transferred to a 1 L Morton style resin kettle fitted with a chilled water condenser, thermometer, inert gas sparger and mechanical stirrer. The temperature was adjusted to 25°C and polymerization was initiated by the addition of $K_2S_2O_8$, followed by $Na_2S_2O_5$. After stirring for 16 hours at 25±0.2°C, the viscous solution was poured slowly into 3 L of acetone. The precipitated polymer was then masticated in a Waring blender with additional acetone, filtered and dried under vacuum at 30°C. A variety of terpolymers were prepared using similar techniques with differing amounts of hydropobic octylacrylamide monomer, cationic MAPTAC monomer and micellar surfactants, as listed in Table I. The surfactants used to prepare the micellar polymerization solution were dodecyltrimethylammonium chloride, Quat, and ethoxylated nonyl phenol with 10 to 11 ethoxy groups, CO-710 supplied by GAF.The elemental analysis of these polymers is given in Table II.

These Examples demonstrate processes for preparing terpolymers containing a range of hydrophobic and cationic monomer levels.

TABLE I

Compositional Data for Acrylamide-MAPTAC Polymers

| Example No. | MAPTAC, Mole % | $C_8AM$ Mole % | Surfactant Type | Surfactant Wt.% | Monomer Concentration Wt.% | Initiators $K_2S_2O_8$ [$Mx10^4$] | Initiators $Na_2S_2O_5$ [$Mx10^4$] |
|---|---|---|---|---|---|---|---|
| 1 | 20 | 1.0 | Quat | 3 | 4.5 | 0.81 | 0.81 |
| 2 | 20 | 0.0 | Quat | 3 | 4.5 | 0.83 | 0.83 |
| 3 | 20 | 1.0 | Quat | 3 | 6.0 | 0.81 | 0.81 |
| 4 | 20 | 1.0 | Quat | 3 | 9.0 | 0.81 | 0.81 |
| 5 | 20 | 1.0 | Quat | 4.5 | 9.0 | 0.81 | 0.81 |
| 6 | 20 | 1.0 | Quat | 6 | 12 | 0.81 | 0.81 |
| 7 | 20 | 0.0 | - | | 4.5 | 0.83 | 0.83 |
| 8 | 20 | 1.0 | Quat | 3 | 4.5 | 0.81 | 0.81 |
| 9 | 5 | 0.0 | Quat | 3 | 9.0 | 1.4 | 1.4 |
| 10 | 5 | 1.0 | Quat | 3 | 9.0 | 1.3 | 1.3 |
| 11 | 5 | 1.0 | Quat | 3 | 4.5 | 1.3 | 1.3 |
| 12 | 10 | 1.0 | Quat | 3 | 4.5 | 1.1 | 1.1 |
| 13 | 5 | 1.0 | Quat | 4.5 | 4.5 | 1.3 | 1.3 |
| 14 | 20 | 1.0 | CO-710 | 5 | 4.5 | 0.81 | 0.81 |
| 15 | 20 | 0.0 | - | | 4.5 | 0.83 | 0.83 |
| 16 | 20 | 0.0 | CO-710 | 3 | 4.5 | 0.83 | 0.83 |
| 17 | 20 | 1.0 | CO-710 | 3 | 4.5 | 0.81 | 0.81 |
| 18 | 20 | 1.5 | CO-710 | 3 | 4.5 | 0.80 | 0.80 |
| 19 | 10 | 0.0 | Quat | 3 | 4.5 | 1.1 | 1.1 |
| 20 | 10 | 2.5 | Quat | 3 | 4.5 | 1.1 | 1.1 |
| 21 | 10 | 0.0 | Quat | 3 | 4.5 | 1.1 | 1.5 |
| 22 | 10 | 1.5 | Quat | 3 | 4.5 | 1.1 | 1.1 |
| 23 | 10 | 1.0 | CO-710 | 3 | 9.0 | 1.1 | 1.1 |
| 24 | 10 | 1.0 | Quat | 3 | 9.0 | 1.1 | 1.1 |

TABLE II

| Elemental Analysis of Terpolymers | | | | |
|---|---|---|---|---|
| Example No. | Cl Analysis, % | | MAPTAC INC.,[a] | Conversion |
| | Calc | Found | | |
| 1 | 6.96 | 6.39 | 104 | 87.6 |
| 2 | 7.03 | 6.20 | 97 | 96.9 |
| 3 | 6.96 | 5.87 | 92 | 100 |
| 4 | 6.96 | 5.72 | 92 | 100 |
| 5 | 6.96 | 6.52 | 103 | 89.6 |
| 6 | 6.96 | 6.80 | 108 | 82.9 |
| 7 | 7.03 | 5.35 | 84 | 22.8 |
| 8 | 6.96 | 6.33 | 100 | 84.8 |
| 9 | 2.26 | 2.02 | 96 | 99.1 |
| 10 | 2.23 | 1.74 | 85 | 94.5 |
| 11 | 2.23 | 1.96 | 97 | 100 |
| 12 | 4.08 | 3.47 | 94 | 94.7 |
| 13 | 2.23 | 2.03 | 94 | 96.0 |
| 14 | 6.96 | 6.36 | 99 | 75.6 |
| 15 | 7.03 | 5.36 | 84 | 48.4 |
| 16 | 7.03 | 5.94 | 91 | 77.8 |
| 17 | 6.96 | 6.27 | 97 | 76.3 |
| 18 | 6.92 | 6.54 | 102 | 72.1 |
| 19 | 4.13 | 3.35 | 87 | 100 |
| 20 | 4.00 | 3.61 | 97 | 100 |
| 21 | 4.13 | 3.72 | 92 | 95.3 |
| 22 | 4.05 | 3.81 | 97 | 90.4 |
| 23 | 4.08 | 3.24 | 83 | 73.8 |
| 24 | 4.08 | 3.68 | 94 | 95.8 |

a. MAPTAC incorporation = Cl (found)/Cl (calc) x 100 corrected for polymer volatiles content.

Examples 25-27

Micellar Polymerization with Other Cationic Monomers

A micellar surfactant solution was prepared in 500 ml of deoxygenated water. N-octylacrylamide, $C_8AM$, was dissolved in this solution, followed by acrylamide and cationic monomer. The resulting solution was carefully transferred to a 1 L morton style resin kettle fitted with a chilled water condenser, thermometer, inert gas sparger and mechanical stirrer. The temperature was adjusted to 25°C and polymerization was initiated by the addition of $K_2S_2O_8$, followed by $Na_2S_2O_5$. After stirring for 16 hours at 25 ± 0.2°C, the viscous solution was poured slowly into 3 L of acetone. The precipitated polymer was then masticated in a Waring blender with additional acetone, filtered and dried under vacuum at 30°C. A variety of terpolymers, listed in Table III, were prepared with 2-methacrylatoethyltrimethylammonium chloride, METAC, and diallyl dimethylammonium chloride, DMDAAC, using similar techniques. The yields and analysis of the isolated polymers are given in Table IV.

Examples 28-29

Micellar Polymerization with Other Hydrophobic Monomers

A micellar surfactant solution was prepared in 500 ml of deoxygenated water. Hydrophobic monomer was dissolved in this solution, followed by acrylamide and MAPTAC. The resulting solution was carefully transferred to a 1 L Morton style resin kettle fitted with a chilled water condenser, thermometer, inert gas

sparger and mechanical stirrer. The temperature was adjusted to 25 ° C and polymerization was initiated by the addition of $K_2S_2O_8$, followed by $Na_2S_2O_5$. After stirring for 16 hours at 25±0.2 ° C, the viscous solution was poured slowly into 3 L of acetone. The precipitated polymer was then masticated in a Waring blender with additional acetone, filtered and dried under vacuum at 30 ° C. Two terpolymers, listed in Table V, were prepared with t-octylacrylamide, t-$C_8$AM, and n-dodecylacrylamide, $C_{12}$AM, using similar techniques. The yields and analysis of the isolated polymers are given in Table VI.

TABLE III

Additional Cationic Terpolymers

| Example No. | Cationic Monomer (Mole%) | $C_8AM$ Mole% | Surfactant Type | Surfactant Wt.% | Monomer Concentration Wt.% | Redox Initiator $K_2S_2O_8$ [$M\times10^4$] | Redox Initiator $Na_2S_2O_5$ [$M\times10^4$] |
|---|---|---|---|---|---|---|---|
| 25 | METAC (10) | 1.0 | CO-710 | 3 | 9.0 | 0.81 | 0.81 |
| 26 | DMDAAC (20) | 1.0 | CO-710 | 5 | 4.5 | 0.81 | 0.81 |
| 27 | DMDAAC (20) | 1.0 | Quat | 3 | 4.5 | 0.81 | 0.81 |

TABLE IV

| Elemental Analysis of Terpolymers | | | | |
|---|---|---|---|---|
| Example No. | Cl Analysis, % | | Cationic Monomer Inc.[a] % | Conversion % |
| | Calc. | Found | | |
| 25 | 4.14 | 2.85 | 69 | 80.0 |
| 26 | 7.87 | 1.75 | 22 | 61.3 |
| 27 | 7.87 | 2.10 | 27 | 67.7 |

a. Cationic monomer incorporation = Cl(found)/Cl(calc) x 100 corrected for polymer volatiles content.

Example 30

Solution Viscometrics

Polymer solutions were prepared by the slow addition of a weighed polymer sample to rapidly stirring water in a 125 ml Erlenmeyer flask. Upon complete addition, stirring was stopped and the flask was sealed under nitrogen. Dissolution was allowed to continue for 24 hours with mild agitation. Viscosity determinations of 2,677 ppm polymer solutions were made on a Contraves[R] Low Shear Rheometer at 1.3 and 11 $sec^{-1}$ at 25 ° C. These techniques were used to collect the data presented in Tables VII through X.

**TABLE V**

**Terpolymers with Other Hydrophobic Monomers**

| Example No. | MAPTAC (Mole%) | Hydrophobe Type | Hydrophobe Mole% | Surfactant Type | Surfactant Wt.% | Monomer Concentration Wt.% | Redox Initiators $K_2S_2O_8$ [Mx10$^4$] | Redox Initiators $Na_2S_2O_5$ [Mx10$^4$] |
|---|---|---|---|---|---|---|---|---|
| 28 | 20 | t-$C_8$AM | 1.0 | CO-710 | 3 | 4.5 | 0.81 | 0.81 |
| 29 | 20 | $C_{12}$AM | 1.0 | CO-710 | 3 | 4.5 | 0.81 | 0.81 |

TABLE VI

Elemental Analysis of Terpolymers

| Example No. | Hydrophobe Type | Hydrophobe Mole % | Cl Analysis Calculated | Cl Analysis Found | Cationic Incorporation[a] % | Conversion % |
|---|---|---|---|---|---|---|
| 28 | t-$C_8$AM | 1.0 | 6.96 | 6.13 | 97 | 84.0 |
| 29 | $C_{12}$AM | 1.0 | 6.92 | 6.30 | 103 | 79.5 |

a Cationic monomer incorporation = Cl(found)/Cl(calc) x 100 corrected for polymer volatiles content.

Example 31

Effect of Micellar Surfactant

As shown by the data presented in Table VII, use of the nonionic surfactant, CO-710, resulted in polymers with higher solution viscosity as compared to the cationic surfactant, dodecyltrimethylammonium chloride, Quat, under conditions tested. Also in Table VII, the data show that the concentration of surfactant had a significant effect on polymer solution viscosification. With dodecyltrimethylammonium chloride as the surfactant the viscosity decreased from 12 cP at 1.3 and 11 $sec^{-1}$ to 9.4 and 9.5 cP, respectively, when the surfactant concentration was increased from 3 to 4.5 weight percent (Example 11 versus 14). However, using CO-710 the viscosity loss was more pronounced dropping from 640 and 242 cP, down to 238 and 136 cP at the same shear rates when the surfactant concentration was increased from 3 to 5 weight percent (Examples 18 versus 15). This illustrates the criticality of surfactant type and concentration in controlling solution properties.

TABLE VII

| Effect of Micellar Surfactant | | | | |
|---|---|---|---|---|
| Example No. | MAPTAC Mole % | Surfactant (Wt.%) | Viscosity, cP, @ 2677 ppm | |
| | | | 1.3 sec-1 | 11 sec-1 |
| 8 | 20 | Quat (3) | 38 | 35 |
| 24 | 10 | Quat (3) | 84 | 67 |
| 11 | 5 | Quat (3) | 12 | 12 |
| 13 | 5 | Quat (4.5) | 9.4 | 9.5 |
| 17 | 20 | CO-170 (3) | 640 | 242 |
| 14 | 20 | CO-170 (5) | 238 | 136 |
| 23 | 10 | CO-170 (3) | 2276 | - |

Example 32

Effect of Monomer Concentration

As shown in Table VIII, the solution viscosity increased at all compositions when the monomer concentration in the polymerization reactor was increased. This was evident at all levels of MAPTAC and with either surfactant type. Although no molecular weight determinations were made on these polymers, it can be speculated that the observed increase in viscosity with monomer concentration was due to increased molecular weight.

TABLE VIII

| Effect of Monomer Concentration | | | | |
|---|---|---|---|---|
| Example No. | MAPTAC Mole % | Monomer (Wt.%) | Viscosity, cP @ 2677 ppm | |
| | | | 1.3 $sec^{-1}$ | 11 $sec^{-1}$ |
| 11 | 5 | 4.5 | 12 | 12 |
| 10 | 5 | 9.0 | 48 | 26 |
| 12 | 10 | 4.5 | 28 | 25 |
| 24 | 10 | 9.0 | 84 | 67 |

Example 33

Effect of Hydrophobic Monomer Concentration

The effect of hydrophobic monomer content in the cationic polymer is shown in Table IX. For terpolymers containing 10 mole percent MAPTAC, it can be seen that as the level of $C_8AM$ increases the solution viscosity increases. This is believed to be due to intermolecular polymer association. Similar results

were obtained for a series of terpolymers containing 20 mole percent MAPTAC and a similar range of $C_8$AM. Again, both series of polymers show a direct relationship between solution viscosity and hydrophobe level.

TABLE IX

| Effect of Hydrophobic Monomer Level | | | |
|---|---|---|---|
| Example No. | $C_8$AM Mole % | Solution Viscosity, cP @ 2677 ppm | |
| | | 1.3 sec $^{-1}$ | 11 sec$^{-1}$ |
| 21 | 0.0 | 15 | 15 |
| 12 | 1.0 | 28 | 25 |
| 22 | 1.5 | 105 | 63 |
| 16 | 0.0 | 236 | 140 |
| 17 | 1.0 | 640 | 242 |
| 18 | 1.5 | 2466 | - |

## Example 34

### Effect of Hydrophobe Chain Length

The effect of hydrophobe alkyl chain length on the solution viscosity of 20 mole percent MAPTAC terpolymers containing 1 mole percent hydrophobe wherein the alkyl functionality of the hydrophobe includes t-octyl, n-octyl, and n-dodecyl is shown in Table X. As the effective chain length increases from four carbon atoms of the t-octyl to twelve for n-dodecyl group, the solution viscosity of the terpolymers is increased. The effect of this variable can best be interpreted as due to increased hydrodynamic volume from increased intermolecular hydrophobic association of polymer chains as a result of the presence of a more effective hydrophobe, i.e., $C_4$ versus $C_8$ versus $C_{12}$ chain lengths.

TABLE X

| Effect of Hydrophobic Monomer Type | | | |
|---|---|---|---|
| Example No. | Hydrophobe Type | Solution Viscosity, cP @ 2670 ppm | |
| | | 1.3 sec$^{-1}$ | 11 sec$^{-1}$ |
| 28 | t-$C_8$AM | 175 | 111 |
| 17 | $C_8$AM | 640 | 242 |
| 29 | $C_{12}$AM | 843 | 299 |

## Example 35

### Synthetic Emulsion I Preparation

Cody crude oil (10 g), with the free water removed, was emulsified into 495 g of distilled water containing 100 ppm of an anionic surfactant using a Waring blender or a homogenizer. The concentrated emulsion was permitted to sit overnight (approximately 18 hours) in a separatory funnel and then the bottom layer was diluted (25 g of emulsion per liter of distilled water) and salinity adjusted to 600 ppm of NaCl. This resulted in a test emulsion with the following typical properties:

| | |
|---|---|
| Turbidity: | 270 to 280 NTU |
| Oil Content: | 420 to 450 mg/l |
| pH: | 8.0 (adjusted) |

Usually a large volume of this emulsion (15 L) was prepared and any unused portion was discarded at the end of she day. The emulsion concentrate was occasionally prepared several days ahead of time and removed from the separatory funnel after the prescribed aging time.

Example 36

Oily Water Jar Test

The test emulsion prepared in Example 35 is separated into 500 ml samples, as needed, in 600 ml clear glass beakers (six at a time) and placed on a six-paddle Phipps & Bird stirrer and mixed at approximately 150 to 160 rpm. Polymer is added at this mixing speed and timing is begun. After 30 minutes at high speed the mixing rate is reduced to 10 rpm for 15 minutes and then the beakers are removed from the mixer and allowed to stand for 60 minutes. Samples of solution are removed from a point near the 250 ml mark on the beakers and tested for turbidity (NTU) and oil-in-water content. The object of the test is to achieve the lowest NTU or oil level using the smallest amount of polymer.

Example 37

Oily Water Jar Test

Two polymers made by the process of Examples 1-24 were tested. One polymer, Example 10, was made with 5% cationic MAPTAC monomer, 1% $C_8$AM hydrophobe, the remainder being acrylamide, while the other, Example 9, was made under identical conditions but with no hydrophobic monomer added. Example 9 is similar to commercial polymers. A typical set of test results which demonstrates the benefits of hydrophobic functionalization of water soluble polymers taught in this patent using a laboratory simulated waste water emulsion jar test are shown below.

| ppm Oil Remaining After Treatment with Polymer (starting oil = 505 ppm) | | |
|---|---|---|
| ppm Polymer | Example 10 | Example 9 |
| 1.0 | 461 | 483 |
| 2.0 | 459 | 455 |
| 3.0 | 152 | 417 |
| 3.5 | 95 | |
| 4.0 | 25 | 28 |
| 4.5 | 13 | |
| 5.0 | 5.6 | 20 |
| 5.5 | 4.6 | |
| 6.0 | 6.1 | 36 |
| 7.0 | 9.3 | 60 |

Examples 38-42

Polymerization of N-1-Octylacrylamide, MAPTAC and Acrylamide

An aqueous methanol solution was prepared with purified, deoxygenated water. N-octylacrylamide, $C_8$AM, was dissolved in this solution, followed by acrylamide and 3-methacrylamidopropyltrimethylammonium chloride, MAPTAC. The resulting solution was carefully transferred to a 1 L Morton style resin kettle fitted with a chilled water condenser, thermometer, inert gas sparger and mechanical stirrer. The temperature was adjusted to 25°C and polymerization was initiated by the addition of $K_2S_2O_8$, followed by $Na_2S_2O_5$. After stirring for 16 hours at 25°C the viscous solution was poured slowly into 3 L of acetone.

The precipitated polymer was then masticated in a Waring blender with additional acetone, filtered and dried under vacuum at 30°C. A number of polymers were prepared using similar techniques with different amounts of hydrophobic N-1-octylacrylamide monomer, cationic MAPTAC monomer and methanol, as listed in Table XI. The elemental analysis of these polymers is given in Table XII.

TABLE XI

| Compositional Data for Acrylamide-MAPTAC Polymers | | | | | | |
|---|---|---|---|---|---|---|
| Ex. No. | MAPTAC, Mole% | $C_8$AM Mole% | Methanol Vol.% | Conc., Wt.% | $K_2S_2O_8$ [Mx10[4]] | $Na_2S_2O_5$ [Mx10[4]] |
| 38 | 20 | 0 | 25 | 4.5 | 8.3 | 8.3 |
| 39 | 20 | 1.0 | 25 | 4.5 | 8.1 | 8.1 |
| 40 | 20 | 1.0 | 25 | 4.5 | 8.1 | 8.1 |
| 41 | 20 | 1.5 | 50 | 4.5 | 8.0 | 8.0 |
| 42 | 5 | 1.0 | 25 | 4.5 | 13 | 13 |

TABLE XII

| Elemental Analysis of Terpolymers | | | | |
|---|---|---|---|---|
| Example No. | Cl Analysis, % | | MAPTAC Incorporation[a] % | Conversion % |
| | Calculated | Found | | |
| 38 | 6.96 | 7.02 | 101 | 52.9 |
| 39 | 6.96 | 6.63 | 95.3 | 27.4 |
| 40 | 6.92 | 6.82 | 98.6 | 47.2 |
| 41 | 7.03 | 6.18 | 87.9 | 24.0 |
| 42 | 2.23 | 1.80 | 80.7 | 36.0 |

a MAPTAC incorporation = Cl (found) x Cl (calculated) x 100 corrected for polymer volatiles content.

Examples 43-56

Polymerization of N-t-Octylacrylamide, MAPTAC and Acrylamide

A 1 L resin kettle was fitted with a water condenser, heating mantle, thermometer, temperature controller, inert gas sparger, injection port and mechanical stirrer. All reagents were added and diluted to specified concentration with deionized water according to the requirements in Table XIII. The reactor contents were brought to reaction temperature while sparging with nitrogen. Polymerization was initiated with $K_2S_2O_8$. A second injection of initiator was added after 1 hour. The polymerizations were complete in 3 to 5 hours. The product polymer was either used as is or precipitated into acetone and dried under vacuum. Table XIII contains specific examples of feed ingredients and reaction parameters. A number of terpolymers were made using similar techniques with different amounts of N-t-octylacrylamide monomer ($tC_8AM$), MAPTAC and acrylamide. In addition, temperature, total monomer concentration, isopropanol (IPA) and initiator levels were varied, resulting in produce viscosity changes cited in Table XIII. The polymer of Example 55 was prepared without solvent, resulting in a product mixture that was a gel; its viscosity was beyond the measurement capabilities of the instrument (>150,000). Example 56 is representative of polymers made by a micellar polymerization process wherein the water insoluble, hydrophobic monomer is dispersed into the aqueous polymerization medium with a surfactant, in this example a nonionic surfactant, CO-710.

TABLE XIII

Polymerization Data for N-t-Octylacrylamide, MAPTAC and Acrylamide Polymers

| Example No. | MAPTAC Mole % | $tC_8AM$ Mole % | IPA Wt.% | Temp. oC | Monomer Concentration Wt.% | $K_2S_2O_8$ Wt.% | Product Viscosity cps |
|---|---|---|---|---|---|---|---|
| 43 | 10 | 2 | 6 | 70 | 21 | 0.018 | 8,600 |
| 44 | 10 | 2 | 6 | 70 | 21 | 0.018 | 11,500 |
| 45 | 20 | 2 | 6 | 70 | 21 | 0.018 | 5,200 |
| 46 | 10 | 4 | 6 | 70 | 21 | 0.018 | 9,500 |
| 47 | 10 | 6 | 6 | 70 | 21 | 0.018 | 11,300 |
| 48 | 10 | 2 | 3 | 70 | 21 | 0.018 | 110,000 |
| 49 | 10 | 2 | 10 | 70 | 21 | 0.018 | 3,400 |
| 50 | 10 | 2 | 6 | 60 | 21 | 0.018 | 16,200 |
| 51 | 10 | 2 | 6 | 80 | 21 | 0.018 | 4,600 |
| 52 | 10 | 2 | 6 | 70 | 27 | 0.018 | 94,000 |
| 53 | 10 | 2 | 6 | 70 | 24 | 0.018 | 66,800 |
| 54 | 10 | 2 | 6 | 70 | 21 | 0.009 | 17,600 |
| 55 | 10 | 2 | 0 | 70 | 21 | 0.018 | gel |
| 56 | 10 | 2 | * | 50 | 10 | | 50,000 |

*Ethoxylated nonyl phenol (10 ethoxy groups), CO-710, supplied by GAF Corp., was used at 3 weight percent concentration.

## Example 57

Synthetic Emulsion Preparation

Cody crude oil (10 grams), with the free water removed, was emulsified into 495 grams of distilled water containing 100 ppm of an anionic surfactant using a Waring blender or a homogenizer. The concentrated emulsion was permitted to sit overnight (approximately 18 hours) in a separatory funnel and then the bottom layer was diluted (25 grams of emulsion per liter of distilled water) and the salinity was adjusted to 600 ppm NaCl. This resulted in a test emulsion with the following typical properties.

| | |
|---|---|
| Turbidity: | 270 to 280 NTU |
| Oil Content: | 420 to 450 mg/l |
| pH: | 8.0 (adjusted) |

Usually a large volume of this emulsion (15 liters) was prepared and any unused portion was discarded at the end of the day. The emulsion concentrate was occasionally prepared several days ahead of time and removed from the separatory funnel after the prescribed aging time.

Example 58

Polymer Performance Measured by Wemco Oily Water Test

An induced air flotation test was used in the laboratory to simulate field induced air flotation units. A Wemco 1+1 Laboratory Flotation Machine, available from Wemco in Sacramento, California, was used. Three liters of emulsion prepared in Example 57 were placed in the Wemco vessel. The mixer was turned on and maintained at 1,000 rpm and test polymer added and mixed in for 30 seconds. The air was then turned full on while mixing continued for 120 seconds. At this time froth is formed and oil floats to the surface in an effective polymer or additive is present. The unit was turned off after the 120 second aeration and permitted to sit without movement for 30 seconds. Samples for turbidity were withdrawn by pipet from a fixed point in the bottom of the vessel after the 30 second wait. The polymers tested along with their performance are presented in Table XIV.

It is clear from these data that the polymers prepared by the solution process of this invention can exhibit oily water clean-up that is comparable to that of the polymer produced by the micellar process. However, it should be noted that the product of the micellar process will be of higher molecular weight than that provided by the solution process. In some applications, especially if polymer molecular weight is not a critical parameter, advantage can be gained from the lower molecular weight solution process. For example, since the product viscosity provided by the solution process is significantly lower than that of the micellar process, even at much higher resultant polymer concentrations (21 versus 10 weight percent), the advantages of the process of this invention are the economics of smaller scale and ease of handling the less viscous product.

TABLE XIV

| Wemco Test Data | | | | | | |
|---|---|---|---|---|---|---|
| Ex. No. | MAPTAC Mole% | $tC_8AM$ Mole% | IPA Wt.% | Monomer Conc. Wt.% | Product Visc. cps | Turbidity Remaining, %NTU @ 1 ppm |
| 43 | 10 | 2 | 6 | 21 | 8,600 | 3 |
| 44 | 10 | 2 | 6 | 21 | 11,500 | 3 |
| 45 | 20 | 2 | 6 | 21 | 5,200 | 4 |
| 46 | 10 | 4 | 6 | 21 | 9,500 | 4 |
| 56 | 10 | 2 | * | 10 | 50,000 | 4 |

*Ethoxylated nonyl phenol (10 ethoxy groups), CO-710, supplied by GAF Corp., was used at 3 weight percent concentration.

Example 59

Micellar Terpolymerization with Cationic Monomers

A solution of 15 g of Arquad[R] (trimethyldodecyl ammonium chloride, Armak Chemical Company) in 500 ml of deoxygenated water was prepared. N-octylacrylamide, 0.4034 g, was dissolved in this solution, followed by 12.37 g of acrylamide and 9.73 g of MAPTAC. The resulting solution was carefully transferred to a 1 L Morton style resin kettle fitted with a chilled water condenser, thermometer, inert gas sparger and mechanical stirrer. The temperature was adjusted to 25° C and polymerization was initiated by the addition of 0.117 g of $K_2S_2O_8$, followed by 0.0077 g of $Na_2S_2O_5$. After stirring for 16 hours at 25±0.2° C the viscous solution could be used as in cement form or in the polymer isolated by pouring slowly into 3 L of acetone. The precipitated polymer was then masticated in a Waring blender with additional acetone, filtered and dried under vacuum at 30° C. The yield of polymer was 19.7 g (87.6%). A variety of terpolymers were prepared using similar techniques with differing types and amounts of hydrophobic N-alkylacrylamides and water soluble cationic monomers, such as ammoniumalkyl acrylamides, ammoniumalkyl acrylates and diallyl ammonium salts.

Example 60

Cody crude oil (10 g), with the free water removed, was emulsified into 495 g of distilled water containing 100 ppm of an anionic surfactant using a Waring blender or a homogenizer. The concentrated emulsion was permitted to sit overnight (approximately 18 hours) in a separatory funnel and then the bottom layer was diluted (25 g of emulsion per liter of distilled water) and salinity adjusted to 600 ppm of NaCl. This resulted in a test emulsion with the following typical properties:

| | |
|---|---|
| Turbidity: | 270 to 280 NTU |
| Oil Content: | 420 to 450 mg/l |
| pH: | 8.0 (adjusted) |

Usually a large volume of this emulsion (15 L) is prepared and any unused is discarded at the end of the day. The emulsion concentrate can be prepared several days ahead of time as long as it is removed from the separatory funnel after the prescribed aging time.

Example 61

Synthetic Emulsion Preparation

Bakersfield crude oil (10 g), with the free water removed, was emulsified into 495 g of distilled water using a homogenizer. The concentrated emulsion was permitted to sit overnight (approximately 18 hours) in a separatory funnel and then the bottom layer was diluted (25 g of emulsion per liter of distilled water) and salinity adjusted to 600 ppm of NaCl. This resulted in a test emulsion with the following typical properties:

| | |
|---|---|
| Turbidity: | 160 to 190 NTU |
| Oil Content: | 160 to 190 mg/l |
| pH: | 8.0 (adjusted) |

Usually a large volume of this emulsion (15 L) is prepared and any unused is discarded at the end of the day. The emulsion concentrate can be prepared several days ahead of time as long as it is removed from the separatory funnel after the prescribed aging time.

Example 62

Oily Water Treating with Conventional Polymers

The test emulsion prepared in Example 60 is separated into 500 ml samples, as needed, in 600 ml clear glass beakers (six at a time) and placed on a six paddle Phipps & Bird stirrer and mixed at approximately 150 to 160 rpm. Polymer is added at this mixing speed and timing is begun. After 30 minutes at high speed the mixing rate is reduced to 10 rpm for 15 minutes and then the beakers are removed from the mixer and allowed to stand for 60 minutes. Samples of solution are removed from a point near the 250 ml mark on the beakers and tested for turbidity (NTU) and oil-in-water content. The object of

the test is to achieve the lowest NTU or oil level using the smallest amount of polymer

A typical set of test results, which demonstrates the performance of conventional water soluble polymers using a laboratory simulated waste water emulsion Jar Test, are shown below.

POLYMERS: A - epipolyamine adduct of epichlorohydrin and dimethylamine
B - 59 Wt.% Cationic Acrylamide

Starting Oil Level = 465 ppm, 275 NTU

| Polymer | ppm Active Polymer | After Treatment Turbidity NTU | After Treatment Oil ppm |
|---|---|---|---|
| A | 0.25 | 260 | 464 |
| | 0.38 | 115 | 430 |
| | 0.5 | 180 | 450 |
| | 0.75 | 240 | 445 |
| | 1.0 | 260 | 462 |
| B | 0.3 | 275 | 249 |
| | 0.6 | 140 | 167 |
| | 0.9 | 32 | 273 |
| | 1.2 | 50 | 375 |
| | 1.5 | 80 | 415 |
| | 1.8 | 100 | 421 |

The data indicate that the conventional polymers did not remove too much of the oil, but had a larger effect on turbidity reduction. Oil removal, however, is the critical parameter.

Example 63

Oily Water Treatment with Hydrophobic Functionalized Polymers

A test similar to Example 62 was run using two polymers made by the process in Example 59 of this invention. One polymer (A) was made with 5% cationic MAPTAC monomer, 1% n-octylacrylamide (n-$C_8$AM) hydrophobic monomer, the remainder being acrylamide, while the other polymer (B) was made under identical conditions but with no hydrophobic monomer added. The B polymer is similar to commercial polymers. A typical set of test results, which demonstrates the benefits of hydrophobic functionalization of water soluble polymers taught in this invention using a laboratory simulated waste water emulsion Jar Test are shown below:

ppm Oil Remaining After Treatment With Polymer

(starting oil = 505 ppm)

| | ppm Polymer | | | | | | | | | |
|---|---|---|---|---|---|---|---|---|---|---|
| | 1.0 | 2.0 | 3.0 | 3.5 | 4.0 | 4.5 | 5.0 | 5.5 | 6.0 | 7.0 |
| Polymer A | 461 | 459 | 152 | 95 | 25 | 13 | 5.6 | 4.6 | 6.1 | 9.3 |
| Polymer B | 483 | 455 | 417 | | 28 | | 20 | | 36 | 60 |

The difference in A and B polymer performance is due to the presence of hydrophobic groups in the water dispersible polymer. The hydrophobe containing polymer A of this invention produces the cleaner water and is not as susceptible to over treating as the conventional polymer B.

Example 64

Effect of Hydrophobe Level on Oily Water Treatment

The test method described in Example 62 was used to test a series of polymers on an emulsion prepared according to the method in Example 60 using a Hawkins crude oil. The polymers tested were all synthesized with 20 mole percent cationic MAPTAC monomer, various levels of n-$C_8$AM hydrophobic monomer (see table below), the remainder being acrylamide. The performance data, summarized below, in combination with the data in Example 63, clearly show the advantage of this invention, the use of hydrophobic functionalization on water dispersible polymers, that an increase in the amount of hydrophobe functionalization improves performance for this crude, and that this invention is useful on more than one crude.

| ppm Oil Remaining After Treatment With Polymer (starting oil = 269 ppm) | | | | | | |
|---|---|---|---|---|---|---|
| Polymer | Hydrophobe | 1.0 | 1.5 | 2.0 | 2.5 | 3.0 |
| A | None | 241 | 58 | 112 | 245 | 265 |
| B | 1.0% n-$C_8$ | 236 | 10 | 54 | 48 | 7 |
| C | 1.5% n-$C_8$ | 55 | 37 | 6 | 25 | |

Example 65

Effects of Hydrophobic Type and Level on Oily Water Treatment

The test method described in Example 62 was used to test a series of polymers on an emulsion prepared according to the method in Example 60. The polymers tested in cement form were all synthesized with 10 mole percent cationic MAPTAC monomer, various levels and types of $C_8$AM hydrophobic monomer (see table below), the remainder being acrylamide. The polymers tested were in the cement form. The cements that are referred to in this invention are the viscous solutions formed during polymerization which contain polymer, surfactant and any unreacted components. No purification is used prior to use of a cement. The performance data are shown in the table below.

| ppm Oil Remaining After Treatment with Polymer (starting oil = 480 ppm) | | | | | | | |
|---|---|---|---|---|---|---|---|
| Polymer | Hydrophobe | ppm active polymer | | | | | |
| | | .5 | .75 | 1.0 | 1.25 | 1.5 | 2.0 |
| A | 1.0% n-$C_8$ | 245 | 38 | 25 | 22 | 272 | 438 |
| B | 1.0% t-$C_8$ | 381 | | 51 | 29 | 420 | 455 |
| C | 1.5% t-$C_8$ | 422 | | 67 | 58 | 304 | 441 |

The data indicate that n-$C_8$ hydrophobe is better than t-$C_8$ at both molar levels tested on the Cody emulsion using the Jar Test.

Example 66

Effects of Hydrophobe Type and Level on Wemco Oil Water Test

An induced air flotation test was used in the laboratory to simulate field induced air flotation units. A Wemco 1+1 Laboratory Flotation Machine, available from Wemco in Sacramento, California was used. Three liters of emulsion prepared in Example 60 were placed in the Wemco vessel. The mixer was turned on and maintained at 1,000 rpm and test polymer was added and mixed in for 30 seconds. The air was then turned full on while mixing continued for 120 seconds. At this time froth forms and oil floats to the surface if an effective polymer or additive is present. The unit was turned off after the 120 second aeration and the water was permitted to sit without movement for 30 seconds. Samples for turbidity and oil analysis were withdrawn by pipet from a fixed point near the bottom of the vessel after the 30 second wait. The polymers tested in cement form were all synthesized with 10 mole percent cationic MAPTAC monomer, various levels and types of $C_8$AM hydrophobic monomer (see table below), the remainder being acrylamide.

The performances are shown in the table below.

| ppm Oil Remaining After Treatment With Polymer (starting oil = 499 ppm) | | | | | | |
|---|---|---|---|---|---|---|
| Polymer | Hydrophobe | ppm Active Polymer | | | | |
| | | 1.0 | 1.5 | 1.75 | 2.0 | 2.5 |
| A | 1.0% n-$C_8$ | 132 | 41 | 52 | 70 | |
| B | 1.0% t-$C_8$ | 242 | 73 | 115 | 156 | |
| C | 1.5% t-$C_8$ | 364 | 51 | | 44 | 77 |

The data indicate that n-$C_8$ is better than t-$C_8$ at equal molar hydrophobe and that more t-$C_8$ is better under flotation test conditions.

Example 67

Effect of Wemco Mixing Time

A test was performed to determine the effect of Wemco mixing time on the performance of the hydrophobically functionalized polymers. The test method described in Example 61 was used to test a series of polymers on an emulsion prepared according to the method in Example 3. A treatment rate of 1.0 ppm active polymer was used in all of the testing. The only variable was the polymer type and the amount of aeration in the test. The polymers tested were in the cement form and both were made with 10% MAPTAC, with and without t-$C_8$AM hydrophobic monomer, the remainder being acrylamide. The performance data below clearly show the benefits of hydrophobic group addition to cationic acrylamide copolymers.

| ppm Oil Remaining After Treatment with Polymer (starting oil = 183 ppm) | | | | | |
|---|---|---|---|---|---|
| Polymer | Hydrophobe | Seconds of Aeration | | | |
| | | 30 | 60 | 90 | 180 |
| A | None | 56 | 31 | 24 | 15 |
| B | 2.0% t-$C_8$ | 39 | 16 | 10 | 4 |

Example 68

A Wemco test was performed on a series of polymers using an emulsion prepared according to Example 60 and the test method in Example 66. The polymers tested were all synthesized with 20 mole percent cationic MAPTAC monomer, various levels and types of hydrophobic acrylamide monomer (see table below), the remainder being acrylamide. The performance data are summarized below:

| ppm Oil Remaining After Treatment With Polymer (starting oil = 483 ppm) | | | | | | |
|---|---|---|---|---|---|---|
| Polymer | Hydrophobe | ppm Active Polymer | | | | |
| | | 1.0 | 1.5 | 2.0 | 2.5 | 3.0 |
| A | None | 258 | 119 | 103 | 228 | |
| B | 1.0% n-$C_8$ | | 104 | 82 | 199 | |
| C | 1.5% n-$C_8$ | 197 | 134 | 91 | 63 | 122 |
| D | 1.0% t-$C_8$ | | 118 | 106 | 184 | |
| E | 1.0% n-$C_{12}$ | | 146 | 116 | 191 | |

The data indicate that at a high cationic charge density, 20 mole percent, there once again is a benefit to having hydrophobe on the water soluble polymer backbone and that normal octyl is the most efficient under the conditions of this Example.

Example 69

Wemco Oily Water Test

A Wemco test was performed on a series of polymers using a Bakersfield emulsion prepared according to Example 61 and the test method in Example 66. The polymers tested in the cement form were all synthesized with 10 mole percent cationic MAPTAC monomer, various levels of t-$C_8$AM hydrophobic monomer (see table below), the remainder being acrylamide. The performance data are shown in the table below.

| ppm Oil Remaining After Treatment With Polymer (starting oil = 197 ppm) | | | | | | |
|---|---|---|---|---|---|---|
| Polymer | Hydrophobe | ppm Active Polymer | | | | |
| | | .25 | .5 | 1.0 | 1.5 | 2.0 |
| A | None | | 139 | 19 | 30 | 48 |
| B | 1.0% t-$C_8$ | 168 | 16 | 10 | 19 | |
| C | 1.5% t-$C_8$ | 150 | 9 | 8 | 14 | |

The data indicate that t-$C_8$ hydrophobe can be effective compared to currently available copolymers. In comparison with the emulsion of Example 66 this system is more effective in clarifying Bakersfield emulsion. Thus, the importance of testing a polymer system against several different types of oily water emulsions is indicated.

Example 70

Wemco Oily Water Test

A Wemco test was performed on a series of polymers using an emulsion prepared according to Example 61 and the test method in Example 66. The polymers tested were in cement form and were all synthesized with 10 mole percent cationic MAPTAC monomer, various levels of t-$C_8$AM hydrophobic monomer (see table below), the remainder being acrylamide. The performance data are shown in the table below.

| ppm Oil Remaining After Treatment With Polymer (starting oil = 174 ppm) | | | | | | |
|---|---|---|---|---|---|---|
| Polymer | Hydrophobe | ppm Active Polymer | | | | |
| | | .5 | 1.0 | 1.5 | 20 | 3.0 |
| A | 3.0% t-$C_8$ | 18 | 7 | 7 | 11 | 17 |
| B | 4.0% t-$C_8$ | 15 | 4 | 5 | 6 | |
| C | 5.0% t-$C_8$ | 20 | 17 | 8 | 19 | |

The data indicate that increasing t-$C_8$ hydrophobe level can result in improved performance and that there may be an upper limit to useful hydrophobe content.

Example 71

Wemco Oily Water Tests with DMDAAC Cationic Polymers

A Wemco test was performed on a series of polymers using an emulsion prepared according to Example 61 and the test method in Example 66. The polymers tested were all synthesized with 20 mole percent cationic DMDAAC monomer, various levels of N-$C_8$AM hydrophobic monomer (see table below), the remainder being acrylamide. The performance data are shown in the table below.

| ppm Oil Remaining After Treatment With Polymer (starting oil = 168 ppm) | | | | | | |
|---|---|---|---|---|---|---|
| Polymer | Hydrophobe | ppm Active Polymer | | | | |
| | | 0.5 | 1.0 | 1.5 | 2.0 | 3.0 |
| A | None | 161 | 155 | 152 | 159 | |
| B | 1.0% n-$C_8$ | 109 | 99 | 106 | 104 | 103 |
| C | 1.5% n-$C_8$ | 155 | 117 | 93 | 84 | 58 |

The data show that the DMDAAC cationic monomer may be used in this invention.

Example 72

Wemco Oily Water Field Test

A Wemco water clarification test was performed in an oil production field essentially using the method of Example 66. The purpose of this test was to evaluate the effects of the disclosed polymers on live production fluids. The field in which the test was performed produces about 100,000 barrels per day of a heavy oil and about 350,000 barrels per day of water by a steam flood method. The fluid is produced as an emulsion which is broken using conventional techniques. The water resulting from the resolution of the produced emulsion contains varying levels of residual oil and is sent to induced air flotation equipment where conventional polymers are used as flotation aids for oil removal. The water is further polished and is then used as supply water for steam generators. Feed water to the induced air flotation units was collected at a point in the line where it was free of flotation aid additive. The method described in Example 66 was then used on the fresh sample with some modifications. The chemical was mixed in for 15 seconds, rather than 30 seconds. A 60 second aeration time was used.

The water produced had a total dissolved solids of 10,000 mg/l, a pH of about 8.1 and was at about 77°C (170°F). The polymers tested in the cement form were all synthesized with 10 mole percent cationic MAPTAC monomer, with and without 2% t-$C_8$AM hydrophobic monomer (see table below), the remainder being acrylamide. The performance data are shown in the table below.

| % Oil Removal After Treatment With Polymer (starting oil = 52 ppm) | | | | | | |
|---|---|---|---|---|---|---|
| Polymer | Hydrophobe | ppm Active Polymer | | | | |
| | | 0.0 | .25 | .5 | 1.0 | 2.0 |
| A | None | 23 | 9 | 26 | 28 | 17 |
| B | 2.0% t-$C_8$ | | 42 | 56 | 56 | 53 |
| C | 2.0% t-$C_8$ | | 48 | 56 | | |

The data show that hydrophobic functionalized polymers (B and C) perform better than conventional polymers (A) in the field on fresh fluids. B and C polymers are replicate synthesis runs. The data also indicate the performance reproducibility of two batches of polymer made by the process described in this invention.

Example 73

Wemco Oily Water Field Test

A series of polymers were tested using the method and location described in Example 72. The polymers tested in the cement form were all synthesized with 10 mole percent cationic MAPTAC monomer, 2 mole percent t-$C_8$AM hydrophobic monomer, the remainder being acrylamide. Molecular weight was the key variable and was estimated by solution viscosity and preparation conditions. The performance data are shown in the table below.

| % Oil Removal After Treatment With Polymer (starting oil = 52 ppm) | | | | | | |
|---|---|---|---|---|---|---|
| Polymer | Molecular Weight | ppm Active Polymer | | | | |
| | | 0.0 | .25 | .5 | 1.0 | 2.0 |
| A | Low | 12 | 38 | 50 | | |
| B | Medium | | 35 | 59 | 59 | 43 |
| C | High | | 31 | 54 | 57 | 62 |
| D | Current product & treatment level | | | | | 52 |

The data indicate that good water clarification performance can be achieved with hydrophobically functionalized polymers over a wide range of molecular weight and that good performance can be achieved in the field and the laboratory.

Example 74

Wemco Oily Water Field Test

A series of polymers were tested using the method described in Example 73 at a different steam flood location producing oil from a very different area. The Wemco was run at 1,100 rpm. Additive was mixed without air for 15 seconds, a 45 second aeration time was used, and the sample for analysis was removed from the bottom of the vessel with the air still on at the end of the aeration time. The polymers tested were all synthesized with 10 mole percent cationic MAPTAC monomer, with or without n-$C_8$AM hydrophobic monomer, the remainder being acrylamide. The data are summarized in the table below.

| % Oil Removal After Treatment With Polymer (starting oil = 130 to 190 ppm) (oil removal range without chemical = 53 to 68%) | | | | | | |
|---|---|---|---|---|---|---|
| Polymer | Hydrophobe | ppm Active Polymer | | | | |
| | | 0.4 | .75 | 1.5 | 3.0 | 4.5 |
| A | None | | 64 | 58 | | |
| B | 1.5% n-$C_8$ | 77 | 81 | 84 | 83 | |
| Current Commercial Chemical Used | | | | 75 | 79 | 72 |

The data indicate that the polymers of this invention perform better than conventional polymer without hydrophobic functionalization under field conditions and that the performance advantage of this invention is not limited to one field.

Example 75

Wemco Oily Water Field Test

A series of polymers were tested using the method described in Example 72 at a different steam flood location producing oil from a very different area. The method was the same, only the sample for analysis was taken from the Wemco while the vessel was draining, immediately at the end of the test. The polymers tested were all synthesized with 10 mole percent cationic MAPTAC monomer, with or without n-$C_8$AM hydrophobic monomer, the remainder being acrylamide. Polymers A, B and C were synthesized according to the method described in Example 1 using the referenced surfactant. Polymer D was synthesized using the same method but with an ethoxylated nonyl phenol surfactant in place of the previous one. The data are summarized in the table below.

| % Oil Removal After Treatment With Polymer (starting oil = 142 ppm) (oil removal without chemical = -2%) | | | | | | | |
|---|---|---|---|---|---|---|---|
| Polymer | Hydrophobe | ppm Active Polymer | | | | | |
| | | .25 | .375 | .5 | .75 | 1.0 | 1.25 |
| A | None | | | 21 | | 33 | |
| B | 1.0% n-$C_8$ | | | 42 | 40 | 66 | 63 |
| C | 1.5% n-$C_8$ | 40 | | 70 | 73 | | |
| D | 1.0% n-$C_8$ | 50 | 66 | 70 | 77 | 76 | |
| NOTE: D is the same as B only a different surfactant was used in the polymer synthesis. | | | | | | | |

The data clearly show the benefit of hydrophobe and improved performance with the ethoxylated nonionic surfactant of polymer D relative to polymer B.

Example 76

Reverse Demulsification Field Test

Tests were performed on wellhead fluids in a steam flood field where a water continuous emulsion estimated to contain 10% to 15% of a heavy oil emulsified in it is produced. About 100 ml of fresh produced emulsion was placed in a six ounce bottle. Chemical additives were then added and the bottles were then gently shaken 100 times and allowed to stand for observation. Generally this test was performed in sets such that a complete series of treatment levels of a given chemical were all run at the same time. After initial observation the bottles were shaken vigorously 100 times and allowed to stand once again. Subjective judgments were recorded regarding the water quality produced and the stability of the oil-water interface that resulted. The polymers tested were all synthesized with various levels of MAPTAC cationic monomer, with or without n-$C_8$AM hydrophobic monomer, the remainder being acrylamide. The polymers are further defined along with the performance data in subjective rank order.

| RANK | HYDROPHOBE | % MAPTAC | ppm ACTIVE RANGE | REMARKS |
|---|---|---|---|---|
| | | **EXCELLENT** | | |
| 1 | 1.0% n-$C_8$ | 10 | 4-8 | Good interface, wide treating range, highest molecular weight. |
| | | **VERY GOOD** | | |
| 2 | 1.0% n-$C_8$ | 10 | 3-6 | Loose interface. |
| 2 | 1.5% n-$C_8$ | 10 | 4 | Loose interface. |
| 3 | 1.0% n-$C_8$ | 10 | 3-6 | Loose interface. |
| | | **GOOD** | | |
| 4 | 1.5% n-$C_8$ | 20 | 4-5 | Loose interface. |
| 5 | None | 10 | 2-6 | Loose interface. |

The Examples presented clearly indicate the advantage of the process disclosed in this invention. The presence of a hydrophobic group on the water dispersible polymer during a water treatment or an oil-in-water emulsion breaking operation clearly results in a significant improvement in the performance, the breaking of reverse emulsions and the removal of emulsified or dispersed oil from the waste waters.

**Claims**

**1.** A polymer obtainable by the process of Claim 7 or 8 characterised by the formula :

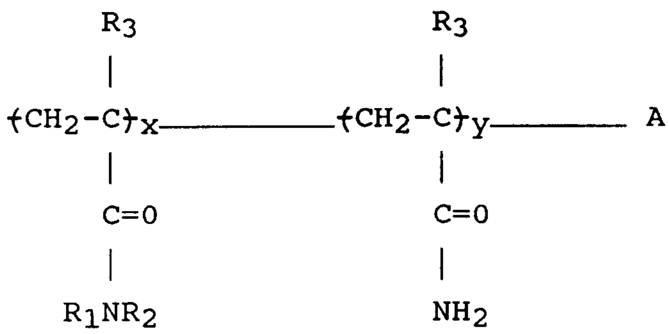

where

- $R_1$ is a $C_4$ to $C_{30}$ linear or branched alkyl, alkylcycloalkyl or alkylaryl group;
- $R_2$ is $C_4$ to $C_{30}$ linear or branched alkyl, alkylcycloalkyl or alkylaryl group or hydrogen;
- $R_3$ is hydrogen or a methyl group;
- x is 0.1 to 20 mole percent;
- y is 0 to 94.9 mole percent; and
- A is either the group

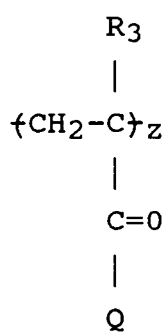

(i)

where

- $R_3$ is as defined above;
- z is 5 to 99.9 mole percent; and
- Q is $NH(CH_2)_nN^+(R_{4,5,6})_3X^-$ or $O(CH_2)_nN^+(R_{4,5,6})_3X^-$ where n is 1 to 6; $R_4$, $R_5$ and $R_6$ are hydrogen, a $C_1$ to $C_6$ linear or branched group, or a $C_5$ to $C_8$ cycloalkyl, aromatic or alkylaromatic group; and $X^-$ is an anion selected from chloride, bromide, methyl sulfate and hydrogen sulfate,

or

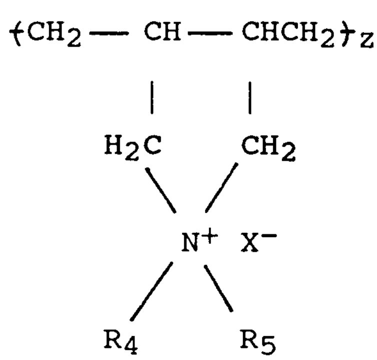

(ii)

where

$X^-$ is an anion selected from chloride, bromide and methyl sulphate; and
z, $R_4$ and $R_5$ are as defined above.

2. A polymer according to claim 1 wherein the monomer A is the group (i).

3. A polymer according to claim 1 wherein the monomer A is the group (ii).

4. A polymer according to any preceding claim which is a terpolymer, x being from 0.2 to 10 mole percent, y being from 10 to 94.8 mole percent, and z being from 5 to 80 mole percent.

5. A polymer according to any preceding claim wherein $R_1$ is a $C_6$ to $C_{18}$ linear or branched alkyl group.

6. A method of breaking an oil-in-water emulsion which comprises the steps of treating an oil-in-water emulsion with at least a de-emulsifying amount of a water dispersible polymer as defined in any preceding claim and separating the formed water phase from the formed oil phase.

7. A homogenous miscellar free radical polymerisation process for the formation of terpolymer of acrylamide, a hydrophobic monomer and a cationic monomer which comprises the steps of:
   a. forming a homogeneous solution in deoxygenated water of acrylamide, a hydrophobic monomer and a cationic monomer using a suitable cationic or nonionic surfactant or a mixture of both types of surfactants under a deoxygenated atmosphere;
   b. adding free radical initiator to said homogeneous reaction mixture to initiate polymerization of said monomers;
   c. copolymerizing said monomer mixture at a temperature of 10 ° C to 90 ° C for a sufficient period of time to form said terpolymer without the formation of substantial amounts of particulates or phase separation occurring.

8. A free radical polymerization process for the formation of a polymer of acrylamide, a hydrophobic monomer and a cationic monomer which comprises the steps of:
   a. forming a solution in deoxygenated water of acrylamide, an oil soluble or hydrophobic monomer and a cationic monomer by using a water miscible solvent;
   b. adding free radical initiator to said solution to form reaction mixture;
   c. copolymerizing said reaction mixture at a temperature of 10 ° C to 90 ° C for a sufficient period of time to form said terpolymer.

## Patentansprüche

1. Polymer, das nach dem Verfahren von Anspruch 7 oder 8 erhältlich ist und durch die Formel:

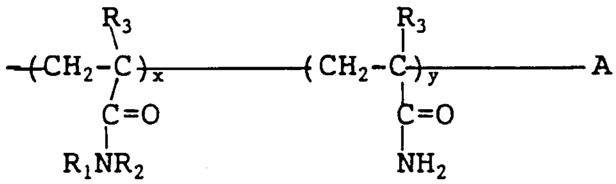

gekennzeichnet ist, wobei
   $R_1$ eine $C_4$ bis $C_{30}$ lineare oder verzweigte Alkyl-, Alkylcycloalkyl- oder Alkylarylgruppe ist;
   $R_2$ eine $C_4$ bis $C_{30}$ lineare oder verzweigte Alkyl-, Alkylcycloalkyl- oder Alkylarylgruppe oder Wasserstoff ist;
   $R_3$ Wasserstoff oder eine Methylgruppe ist;
   x 0,1 bis 20 Mol.% ist;
   y 0 bis 94,9 Mol.% ist; und
   A entweder die Gruppe

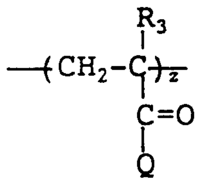 (i)

, wobei

R₃ wie oben definiert ist;

z 5 bis 99,9 Mol.% ist; und

Q $NH(CH_2)_nN^+(R_{4,5,6})_3X^-$ oder $O(CH_2)_nN^+(R_{4,5,6})_3X^-$ ist, wobei n 1 bis 6 ist; $R_4$, $R_5$ und $R_6$ Wasserstoff, eine $C_1$ bis $C_6$ lineare oder verzweigte Gruppe oder eine $C_5$ bis $C_8$ Cycloalkyl-, aromatische oder alkylaromatische Gruppe sind; und $X^-$ ein Anion ausgewählt aus Chlorid, Bromid, Methylsulfat und Hydrogensulfat ist,

oder

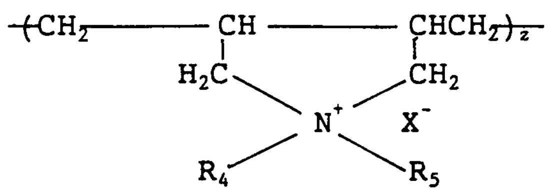 (ii)

wobei

$X^-$ ein Anion ausgewählt aus Chlorid, Bromid und Methylsulfat ist; und

z, $R_4$ und $R_5$ wie oben definiert sind;

ist.

**2.** Polymer nach Anspruch 1, bei dem das Monomer A die Gruppe (i) ist.

**3.** Polymer nach Anspruch 1, bei dem das Monomer A die Gruppe (ii) ist.

**4.** Polymer nach einem der vorangehenden Ansprüche, das ein Terpolymer ist, wobei x 0,2 bis 10 Mol.% ist, y 10 bis 94,8 Mol.% ist und z 5 bis 80 Mol.% ist.

**5.** Polymer nach einem der vorangehenden Ansprüche, bei dem $R_1$ eine $C_6$ bis $C_{18}$ lineare oder verzweigte Alkylgruppe ist.

**6.** Verfahren zum Brechen einer Öl-in-Wasser-Emulsion, bei dem eine Öl-in-Wasser-Emulsion mit mindestens einer demulgierenden Menge eines in Wasser dispergierbaren Polymers, wie in einem der vorangehenden Ansprüche definiert, behandelt wird und die gebildete Wasserphase von der gebildeten Ölphase getrennt wird.

**7.** Homogenes micellares freiradikalisches Polymerisationsverfahren zur Bildung eines Terpolymers von Acrylamid, einem hydrophoben Monomer und einem kationischen Monomer, bei dem

a. unter Verwendung eines geeigneten kationischen oder nicht-ionischen Tensids oder einer Mischung von beiden Tensidtypen unter einer entoxygenierten Atmosphäre eine homogene Lösung von Acrylamid, einem hydrophoben Monomer und einem kationischen Monomer in entoxygeniertem Wasser gebildet wird;

b. freiradikalischer Initiator zu der homogenen Reaktionsmischung gegeben wird, um eine Polymerisation der Monomere zu starten; und

c. die Monomermischung bei einer Temperatur von 10°C bis 90°C für eine ausreichende Zeit copolymerisiert wird, um das Terpolymer ohne Bildung wesentlicher Mengen von Teilchen oder Auftreten von Phasentrennung zu bilden.

**8.** Freiradikalisches Polymerisationsverfahren zur Bildung eines Polymers von Acrylamid, einem hydrophoben Monomer und einem kationischen Monomer, bei dem

a. eine Lösung von Acrylamid, einem öllöslichen oder hydrophoben Monomer und einem kationischen Monomer in entoxygeniertem Wasser durch Verwendung eines wassermischbaren Lösungsmittels gebildet wird;

b. freiradikalischer Initiator zu der Lösung gegeben wird, um eine Reaktionsmischung zu bilden;

c. die Reaktionsmischung bei einer Temperatur von 10°C bis 90°C für eine ausreichende Zeit copolymerisiert wird, um das Terpolymer zu bilden.

## Revendications

**1.** Polymère pouvant être obtenu par le procédé selon la revendication 7 ou 8, caractérisé par la formule :

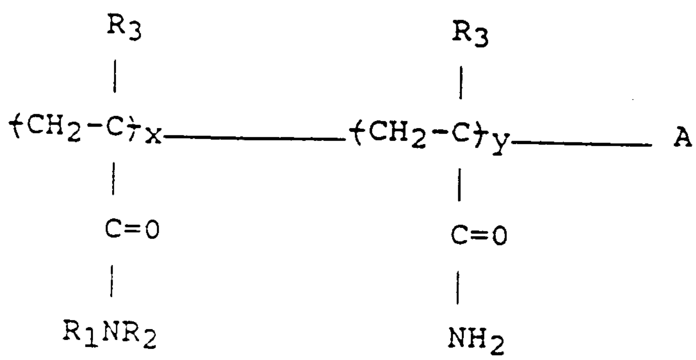

dans laquelle

| | |
|---|---|
| $R_1$ | est un groupe alkyle, alkylcycloalkyle ou alkylaryle linéaire ou ramifié en $C_4$ à $C_{30}$; |
| $R_2$ | est un groupe alkyle, alkylcycloalkyle ou alkylaryle linéaire ou ramifié en $C_4$ à $C_{30}$ ou un hydrogène; |
| $R_3$ | est un hydrogène ou un groupe méthyle; |
| x | a une valeur de 0,1 à 20% en moles; |
| y | a une valeur de 0 à 94,9% en moles; et |
| A | est ou bien le groupe |

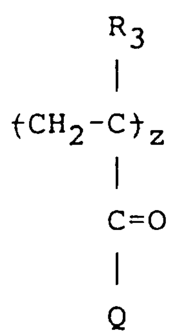

(i)

dans lequel

| | |
|---|---|
| $R_3$ | est tel que défini ci-dessus; |
| z | a une valeur de 5 à 99,9% en moles; et |
| Q | est $NH(CH_2)_nN^+(R_{4,5,6})_3X^-$ ou $O(CH_2)_nN^+(R_{4,5,6})_3X^-$, où n a une valeur de 1 à 6; $R_4$, $R_5$ et $R_6$ sont des atomes d'hydrogène, des groupes linéaires ou ramifiés en $C_1$ à $C_6$, ou des groupes cycloalkyle, aromatiques ou alkylaromatiques en $C_5$ à $C_8$; et $X^-$ est un anion choisi parmi un chlorure, un bromure, un méthylsulfate et un hydrogénosulfate, |

ou bien

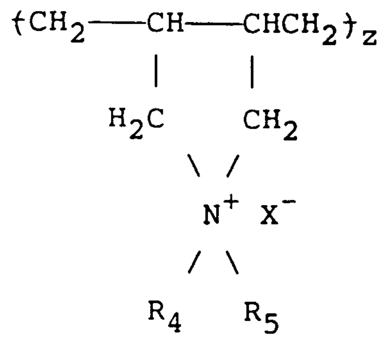

(ii)

dans lequel

X⁻ est un anion choisi parmi un chlorure, un bromure et un méthylsulfate; et

z, $R_4$ et $R_5$ sont tels que définis ci-dessus.

**2.** Polymère selon la revendication 1, dans lequel le monomère A est le groupe (i).

**3.** Polymère selon la revendication 1, dans lequel le monomère A est le groupe (ii).

**4.** Polymère selon l'une quelconque des revendications précédentes, qui est un terpolymère, x ayant une valeur de 0,2 à 10% en moles, y ayant une valeur de 10 à 94,8% en moles et z ayant une valeur de 5 à 80% en moles.

**5.** Polymère selon l'une quelconque des revendications précédentes, dans lequel $R_1$ est un groupe alkyle linéaire ou ramifié en $C_6$ à $C_{18}$.

**6.** Procédé pour rompre une émulsion huile dans l'eau, qui comprend les étapes qui consistent à traiter une émulsion huile dans l'eau avec au moins une quantité désémulsifiante d'un polymère dispersable dans l'eau tel que défini dans l'une quelconque des revendications précédentes et à séparer la phase aqueuse formée de la phase huileuse formée.

**7.** Procédé de polymérisation radicalaire miscellaire homogène pour former un terpolymère d'acrylamide, un monomère hydrophobe et un monomère cationique, qui comprend les étapes qui consistent à :

a. former une solution homogène, dans de l'eau désoxygénée, d'acrylamide, d'un monomère hydrophobe et d'un monomère cationique, en utilisant un tensioactif cationique ou non ionique convenable ou un mélange des deux types de tensioactifs, sous une atmosphère désoxygénée;

b. ajouter un amorceur radicalaire audit mélange réactionnel homogène peur amorcer la polymérisation desdits monomères ;

c. copolymériser ledit mélange de monomères à une température de 10°C à 90°C, pendant suffisamment longtemps pour former ledit terpolymère sans former de quantités substantielles de particules ou sans qu'il se produise de séparation des phases.

**8.** Procédé de polymérisation radicalaire pour former un polymère d'acrylamide,d'un monomère hydrophobe etd'un monomère cationique, qui comprend les étapes qui consistent à :

a. former une solution, dans de l'eau désoxygénée, d'acrylamide, d'un monomère oléosoluble ou hydrophobe et d'un monomère cationique, en utilisant un solvant miscible à l'eau;

b. ajouter un amorceur radicalaire à ladite solution pour former un mélange réactionnel;

c. copolymériser ledit mélange réactionnel à une température de 10°C à 90°C pendant suffisamment longtemps pour former ledit terpolymère.